# EUROPEAN PATENT APPLICATION

(11) **EP 4 517 307 A1**
(43) Date of publication of application: **05.03.2025**
(21) Application number: 23193927.3
(22) Date of filing: 29.08.2023
(51) Int. Cl.: G01N 21/88, G01N 21/95

(54) **INSPECTION OF STEEL ELEMENT**

(71) Applicant: Hitachi Energy Ltd, 8050 Zürich (CH)
(72) Inventor: SADR-MOMTAZI, Nima, 72240 Västerås (SE); CARRANDER, Claes, 17459 Sundbyberg (SE); GRIMELL, Franz, 77130 Ludvika (SE); WEINBERG, David, 77135 Ludvika (SE)
(74) Representative: Epping - Hermann - Fischer

(57) **Abstract**

Method for classifying a steel element (10), comprising the steps of aligning the steel element (10) with an aligning device (20) for accessing at least one surface (11) of the steel element (10), wherein aligning comprises at least one of: rotating, lifting, lowering and pivoting. The method further comprises examining the at least one surface (11), comprising, capturing at least one image (i) of the at least one surface (11), comparing the captured at least one image (i) with a base image (b) representative of a specific quality (q_0) of the at least one surface (11), determining a quality (q1) of the at least one surface (11) depending on the comparison of the captured at least one image (i) with the base image (b), and classifying the steel element (10) based on the determined quality (ql).

## Description

The present disclosure relates to a method for classifying a steel element and a system for executing the method to classify the steel element.

Core steel is used for making the core of transformers and is therefore an essential part of the transformer functionality. As it looks today, the core steel is mainly delivered in coils that are placed on top of a wooden pallet with paper and plastic wrapping. The core steel has a lot of quality issues related to the internal and external transportation which can lead to that the coil gets damaged on the bottom slit-side resting on the pallet. The coil can also be exposed to harsh environmental conditions from outside weather. Rain, snow and high humidity can make the steel rust, especially if the wrapping around the coil is insufficiently applied or damaged.

It is an object to provide a method for classifying a steel element to identify early in the processing of the steel element low quality or damaged steel elements while still reducing the risks of human safety hazards. A further object is to provide a system for accessing and examining the steel element which is more efficient and also secure for humans.

This object is solved by the features of the independent claims. Advantageous embodiments are indicated in the dependent claims.

Embodiments of the disclosure, for instance as claimed in the independent claims, address the above shortcomings in the art in whole or in part. Further embodiments of the method and of the system for classifying the steel element are subject matter of the further claims.

There is provided a method for classifying a steel element comprising the steps of aligning the steel element with an aligning device for accessing at least one surface of the steel element, wherein aligning the steel element comprises at least one of: rotating, lifting, lowering and pivoting. The method further comprises examining the at least one surface, wherein examining comprises capturing at least one image of the at least one surface, comparing the captured at least one image with a base image representative of a specific quality of the at least one surface, determining a quality of the at least one surface depending on the comparison of the captured at least one image with the base image, and classifying the steel element based on the determined quality.

An aligning device is for example a crane, a coil holding machine, a handheld truck, attachments for fork-lifts, coil turning machines, special coil lifting equipment or other solutions, which lift and lower the steel element and/or pivot the steel element and/or rotate the coil around 90° or 180° or any other angle to access a specific surface of the steel element. At least one surface is examined. For example the bottom surface or top surface of a core steel coil. The captured image is compared with a base image representative of a specific quality. The base image is for example stored in a database. The base image is for example an image of a steel surface with certain characteristic features that define a specific quality of the steel element. The specific quality of the steel element is for example "pass", "defect" or "borderline/uncertain". A steel element classified with the quality "pass" is ready for further processing. A steel element classified with the quality "defect" will identified early as low quality or damaged steel element and can be send back to the manufacturer for reimbursement, which saves cost. A steel element classified with the quality "borderline/uncertain" can be further examined. Either automatically or manually.

The possible damages leave a mark on the surfaces of the steel element, for example on the laminates of the steel coil. This marks can be identified and classified by scanning the surfaces of the steel element. Thus, images are captured that show the damage, mostly interrupted parallels lines. During the visual inspection of the steel element the following abnormalities are observed: Rust, tares, angel hairs, white edges and shiny sides can be identified by naming a few possible damage implying marks. The capturing of the image can be either done automatically or manually with different devices. It is also possible to make several images of different spots on a surface or on multiple surfaces to get a proper impression of the quality of the steel element.

Automatic comparing the captured images with images from a database improves efficiency. Less manual work has to be done by touching the surface or by a human operated camera. Automatically performing the steps of examining the steel element is less subjective and thus less prone to errors. Furthermore, not physically touching the steel is an advantage to prevent a working hazard as the edge may be very sharp.

According to an embodiment capturing the at least one image is provided by a camera.

Different cameras or devices for visual inspection with sensitive optics in different wavelength ranges can be used. E.g. sensors or cameras operating in a visible or in a non-visible wavelength spectrum. Furthermore microscopic cameras can be used to detect defects, like burrs on the surface with more precision.

The camera can be connected to a screen, which makes it easier for the operator to get a holistic view of for example the lower slit-side of a steel coil. The camera can be placed next to the alignment device holding the steel element for displaying the steel coil from the side. A way to get a better shot of the slit-side of the steel coil is to place the camera directly underneath the steel coil. A further aspect is the lighting of the steel element. Light coming straight out from the camera that shines directly on the material is not the best solution, since the metal will reflect the light back into the camera. Lighting provided by an external source at the sides of the machine is preferably used.

According to an embodiment capturing the at least one image is provided by lateral chromatic imaging.

Another methods is to use lateral chromatic imaging (LCI) to directly measure the burr height of the surface of the steel element. This methods requires a greater manual process than simply putting a camera to the steel elements, like coils or sheets. With this method internal defects of the steel element can be detected.

According to an embodiment comparing the at least one image with a base image is provided by artificial intelligence and/or machine learning.

Using a camera in connection with artificial intelligence (AI) and/or machine learning, inspections can be automated, or at least improved, to take equal images of the steel element each time and then use machine learning and AI tools to classify the steel element as "defect", "pass" or "borderline/uncertain". To create, a so called, model to be used in this kind of classification, requires big amounts of already classified images. To then using the model to classify images, and thereby the steel element quality is simple and very fast with a high accuracy if enough data was provided in the creation/ and training phase. These camera inspections can potentially be done at different locations.

The possible damages leave a mark on the laminates. By capturing images of the surfaces of the steel element, images are received that show the damage, mostly interrupted parallels lines. Feeding that to an AI system gives an indication, if the surface is damaged or not.

According to a further embodiment the method comprises the steps of unpacking the steel element and afterwards examining the at least one surface.

A crucial time to identify early low quality or damaged steel elements is right after unpacking the steel element. During external and internal transportation, like during delivery from an outside company or the producer respectively by preparing for further processing. Therefore, it is important to identify at least one surface of the steel element, for example the bottom side of a core steel coil, which is placed on a wooden pallet. During transportation the bottom side slides eventually over the wooden pallet and gets damaged. The first potential location is directly at the unpacking. Here defects would be found early and save processing time from the cutting machine, while also allowing the steel coil to be reclaimed by the producer. The biggest problem with doing the inspection at the unpacking is to get the camera under the coil, as they are handled "eye to the sky", and get good enough images. For this purpose the alignment device is used for example to lift the steel coil or to turn it around 90° or 180°.

According to a further embodiment the method comprises the steps of cutting the steel element and afterwards examining the at least one surface.

Inspecting the steel element after it has been cut by the cutting machine for further processing is another alternative. Doing the inspection at this point allows the detection of errors caused by internal processes. As long as the cut steel elements, like sheets are stacked evenly there would be no problem with accessing the edges to capture images of the surface for comparing with the base image.

After cutting the steel element into sheets or smaller slices of the steel element, the cut steel elements are for example placed at a machine to measure the burr height with LCI. This is a more precise method, which can detect internal defects. Alternatively or additionally the visual inspection with a camera is performed.

According to an embodiment examining of the steel element happens before cutting the steel element.

Alternatively or additionally, the examining can also be performed before cutting the steel element. By examining the steel element before and after cutting the two methods could also be combined to get the best from both of the methods. These could be combined to allow an image classification to detect early defects, and use the LCI as a second opinion in the case of "borderline" cases, or if there are suspicions that internal processes may have damaged the steel element.

According to an embodiment the system adapted to execute the steps of the method for classifying a steel element comprises an aligning device with a lifting device and a rotating device. The system further comprises an examining device with a camera, a data storage and a data processing device.

An aligning device is for example a crane, a coil holding machine, a handheld truck, attachments for fork-lifts, coil turning machines, special coil lifting equipment or other solutions, which lift and lower the steel element and/or pivot the steel element and/or rotate the coil around 90° or 180° or any other angle to access a specific surface of the steel element.

An examining device comprises a camera, a data storage and a data processing device. Different cameras or devices for visual inspection with sensitive optics in different wavelength ranges can be used. E.g. sensors or cameras operating in a visible or in a non-visible wavelength spectrum. Furthermore microscopic cameras can be used to detect defects, like burrs on the surface with more precision.

According to an embodiment the computer program comprising instructions to cause the system to execute the steps of the method.

Furthermore a computer-readable medium having stored thereon the computer program is provided.

The method for classifying a steel element and the computer program to execute the steps of the method described above are particularly suitable for the system adapted to execute the steps of the method for classifying a steel element.

Features and advantages described in connection with the system and the computer program can therefore be used for the method and vice versa.

The present disclosure comprises several aspects of a method for classifying a steel element. Every feature described with respect to one of the aspects is also disclosed herein with respect to the other aspect, even if the respective feature is not explicitly mentioned in the context of the specific aspect.

The accompanying figures are included to provide a further understanding. In the figures, elements of the same structure and/or functionality may be referenced by the same reference signs. It is to be understood that the embodiments shown in the figures are illustrative representations and are not necessarily drawn to scale.

Figure 1 to 3 are schematic views of a system for classifying a steel element.

Figure 4 are steps of the method for classifying a steel element.

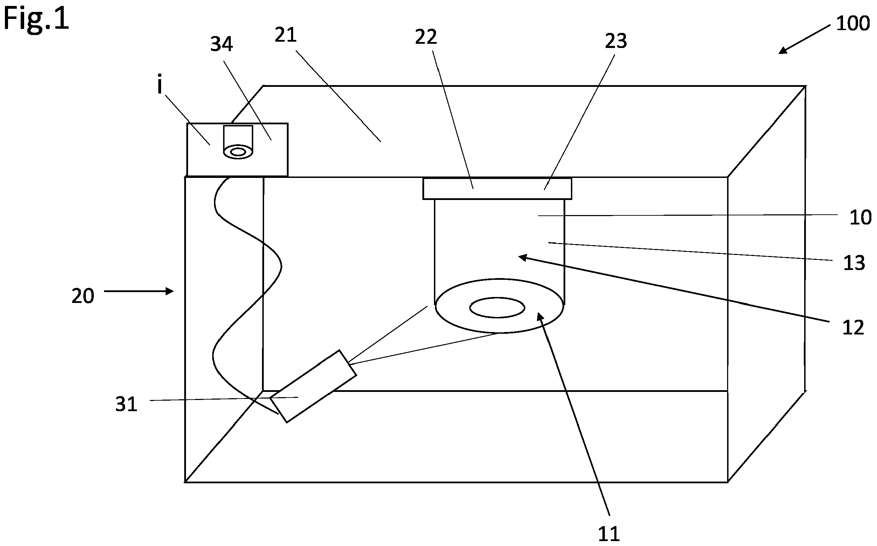

Figure 1 shows a system 100 for classifying a steel element 10. The steel element comprises a first surface 11 and a second surface 12. In figure 1 the first surface 11 is a bottom side of a steel coil 13 and the second surface 12 is a side surface of the steel coil 13. The steel element 10 is not limited to just two surfaces and can have a plurality of surfaces, for example also a top surface. The steel element 10 is alternatively or additionally a steel sheet with surfaces and edges. The system 100 comprises an aligning device 20 and an examining device 30. The aligning device 20 comprises a housing 21, a lifting device 22 and a rotating device 23. The lifting device 22 and rotating device 23 can be separated devices or integrated in one device, like a crane. The aligning device 20 can be for example also a crane, a coil holding machine, a handheld truck, attachments for fork-lifts, coil turning machines, special coil lifting equipment or other solutions, which lift and lower the steel element 10 and/or pivot the steel element 10 and/or rotate the steel element 10 around 90° or 180° or any other angle to access a specific surface of the steel element 10.

The examining device 30 comprises a camera 31, a data storage 32 and a data processing device 33. The camera 31 can be any sensor or camera operating in a visible or in a non-visible wavelength spectrum. Furthermore microscopic cameras can be used to detect defects, like burrs on the surfaces with more precision. In figure 1 the camera 31 is placed next to the alignment device 30 holding the steel element 10 for displaying the steel element 10 from the side. The captured image i is displayed on a monitor 34, which makes it easier for an operator to get a holistic view of the surfaces of the steel element 10.

Alternatively the captured image i is not displayed at all and just processed with base images in a data storage or computer based analyzing tools. In such a case no operator is necessary and the system works fully automated.

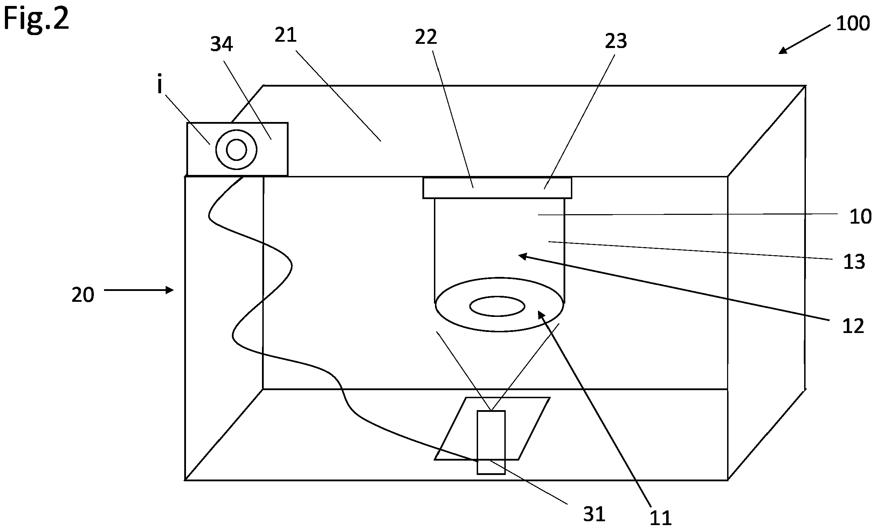

Figure 2 shows another exemplary embodiment of the system 100 for classifying the steel element 10. The system 100 is the same as in figure 1 with the difference that the camera 31 is put directly under the steel element 10 for a better view. In this case, the camera 31 is put in a recess in the floor.

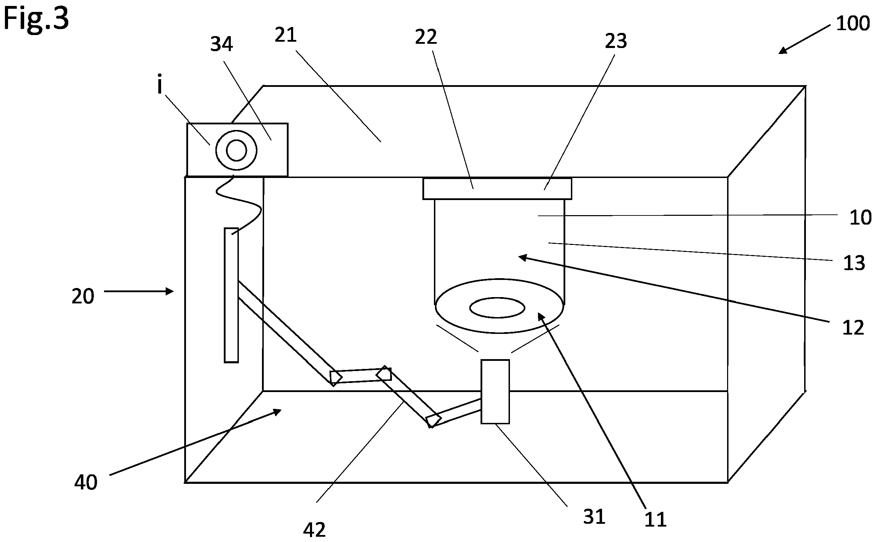

Figure 3 shows another exemplary embodiment of the system 100 for classifying the steel element 10. The embodiment is similar to figure 2. The difference is, for placing the camera 31 below the steel element 10, a metal fixture 40 with flexible arms 42 is used to guide and hold the camera 31 at a specific point of the first surface 11, for example the lower slit-side of a core steel coil. The fixture 40 can be adjusted in the vertical direction to compensate for different heights and widths of the steel element 10 and the flexible arms 42 make it easy for the camera 31, which is attached to the end of the fixture 40 to be placed at a specific point. The fixture 40 can be positioned by an operator with the camera 31 on the bottom slit-side without having any body part directly under the hanging steel element 10 to minimize safety risks. After the operator has placed the camera 31 in contact with the first surface 11 the fixture 40 will hold the camera 31 against the steel element 10 by using a vertical force that is larger than relevant gravitational forces, comparable to a rubber band. When pulling the fixture 40 downwards the rubber band gets stretched and wants to return to its natural position thus generating a force upwards in proportion to the vertical distance downwards. The potential vertical force can be altered to fit specific conditions, like coil dimensions. The camera 31 is connected to the monitor 34 with an installed software that the operator uses to conduct the visual inspection and possibly take images i of the enlarged surface for further investigation.

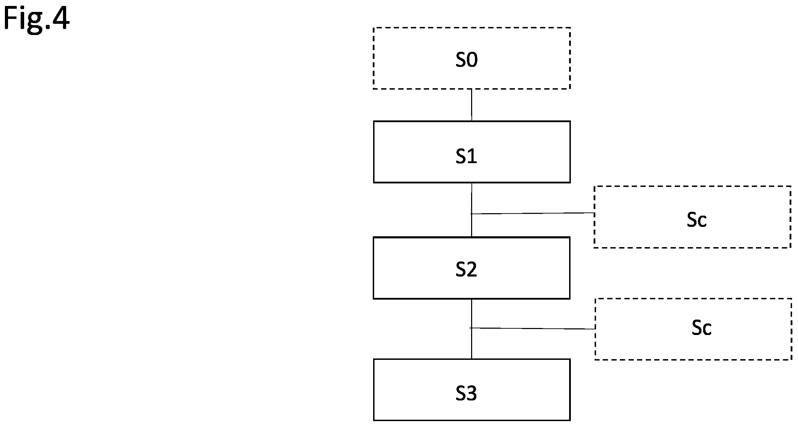

Figure 4 shows steps of the method for classifying the steel element 10. In a first step S1 the steel element 10 is aligned with the aligning device 20. Aligning comprises lifting and lowering the steel element 10 and/or pivoting the steel element 10 and/or rotating the steel element 10 around 90° or 180° or any other angle to access a specific surface of the steel element 10. In a second step S2 at least one surface 11 of the steel element 10 is examined. Examining comprises capturing at least one image i of the at least one surface 11, comparing the captured at least one image i with a base image b representative of a specific quality q1 of the at least one surface 11, determining a quality q1 of the at least one surface 11 depending on the comparison of the captured at least one image i with the base image b, and classifying the steel element 10 based on the determined quality q1. It is also possible to repeat examining the steel element 10 several times to get an unequivocal quality of the steel element 10. In a third step S3 the steel element 10 is classified based on the determined quality q1. Before examining the steel element 10 it can be necessary to unpack the steel element 10 in a separate step S0. Furthermore, the steel element 10 can also be cut in a separate step Sc. Cutting can be done before and/or after examining the steel element 10.

While the disclosure is amenable to various modifications and alternative forms, specifics thereof have been shown by way of example in the figures and will be described in detail. It should be understood, however, that the intention is not to limit the disclosure to the particular embodiments described. On the contrary, the intention is to cover all modifications, equivalents, and alternatives falling within the scope of the disclosure defined by the appended claims.

The embodiments shown in the Figures 1 to 4 as stated represent exemplary embodiments of the method for classifying a steel element and a system adapted to execute the steps of the method; therefore, they do not constitute a complete list of all embodiments according to the method and system for classifying a steel element. Actual arrangements and methods may vary from the embodiments shown in terms of arrangements, devices, methods and signals for example.

### Reference Signs

- 10: steel element
- 11: first surface
- 12: second surface
- 13: steel coil

- 20: aligning device
- 21: housing
- 22: lifting device
- 23: rotating device

- 30: examining device
- 31: camera
- 32: data storage
- 33: data processing device
- 34: monitor

- 40: fixture
- 42: flexible arm
- i: image

- 100: system for classifying

## Claims

1. Method for classifying a steel element (10), comprising the steps of
- aligning the steel element (10) with an aligning device (20) for accessing at least one surface (11) of the steel element (10), wherein aligning comprises at least one of:
- rotating,
- lifting,
- lowering and
- pivoting,
- examining the at least one surface (11), comprising
- capturing at least one image (i) of the at least one surface (11),
- comparing the captured at least one image (i) with a base image (b) representative of a specific quality (q_0) of the at least one surface (11),
- determining a quality (q1) of the at least one surface (11) depending on the comparison of the captured at least one image (i) with the base image (b), and
- classifying the steel element (10) based on the determined quality (q1).

2. Method according to claim 1, wherein capturing the at least one image (i) is provided by a camera (31).

3. Method according to claim 1 or 2, wherein capturing the at least one image (i) is provided by lateral chromatic imaging (LCI) .

4. Method according to claim 1, 2 or 3, wherein comparing the at least one image (i) with a base image is provided by artificial intelligence and/or machine learning.

5. Method according to one of the preceding claims, comprising the steps of unpacking the steel element (10) and afterwards examining the at least one surface (11).

6. Method according to one of the preceding claims, comprising the steps of cutting the steel element (10) and afterwards examining the at least one surface (11).

7. Method according to one of the preceding claims, wherein examining of the steel element (10) happens before cutting the steel element (10).

8. System (100) adapted to execute the steps of the method of claim 1 for classifying a steel element (10), comprising
- an aligning device (20), with
- a lifting device (22),
- a rotating device (23), and
- an examining device (30), with
- a camera (31),
- a data storage (32),
- a data processing device (33).

9. A computer program comprising instructions to cause the system (100) of claim 8 to execute the steps of the method of claim 1.

10. A computer-readable medium having stored thereon the computer program of claim 9.
